# EUROPEAN PATENT APPLICATION

(11) **EP 2 028 594 A2**
(43) Date of publication of application: **25.02.2009**
(21) Application number: 08290772.6
(22) Date of filing: 13.08.2008
(51) Int. Cl.: G06F 11/267

(54) **Manufacturing method and testing method for data transfer apparatus, and the data transfer apparatus**

(30) Priority: 22.08.2007 JP 2007215539
(71) Applicant: Mimaki Engineering Co., Ltd., Tomi-shi, 389-0512 Nagano (JP)
(72) Inventor: Kanai, Hiroshi, Nagano 389-0512 (JP)
(74) Representative: Uchida, Kenji

(57) **Abstract**

A method for manufacturing a data transfer apparatus for conducting data transfer based on USB standard comprises a testing process, wherein the testing process comprises a cable connecting step for connecting a USB host port and a USB device port, a first transfer step for reading out test data as first transfer data and transferring the first transfer data from the USB host port to the USB device port, a second transfer step for transferring the first received data, which was received by the USB device port, as second transfer data from the USB device port to the USB host port, and a second received data checking step for checking the result of the connection test by comparing the second received data, which was received by the USB host port, with the test data.

## Description

The present invention relates to a manufacturing method and a testing method for a data transfer apparatus and the data transfer apparatus.

Recently, data transfer apparatuses for conducting data transfer based on USB (Universal Serial Bus) standard have been widely used. There is conventionally known a data transfer apparatus having ports for both a USB host and a USB device (for example, see Patent document JP-A-2005-165834).

For example during the manufacturing process of a data transfer apparatus having ports for both a USB host and a USB device, it is necessary to carry out tests such as connection tests for testing both functions of the USB host and the USB device. Conventionally, for testing the respective functions of the USB host and the USB device, two different connection tests should be carried out as separate steps of the manufacturing process using an external apparatus having a USB device controller and an external apparatus having a USB host controller, respectively.

In the Patent document JP-A-2005-165834, however, a testing means for simultaneously completing connection tests of an USB host controller and an USB device controller with only an apparatus concerned. According to this testing means, in testing the USB device controller, the USB host controller and a host application thereof function as a test tool for testing the USB device controller. In testing the USB host controller, the USB device controller and a host application thereof function as a test tool for testing the USB host controller.

Efficiently carrying out the tests is very effective for reducing the cost. Therefore, for a data transfer apparatus having ports for both a USB host and a USB device, it is desired to apply a testing method utilizing its structure further efficiently. It is thus an object of the present invention to provide a manufacturing method and a testing method for a data transfer apparatus, and the data transfer apparatus.

To solve the aforementioned problem, there is provided a method for manufacturing a data transfer apparatus for conducting data transfer based on USB (Universal Serial Bus) standard, comprising:
an assembling process for assembling the data transfer apparatus; and
a testing process for testing connection between a USB host and a USB device relative to the data transfer apparatus which was assembled in the assembling process, wherein
the assembling process comprises assembling the data transfer apparatus including:
   a USB host controller for controlling operations as the USB host,
   a USB host port for inputting and outputting data as the USB host,
   a USB device controller for controlling operations as the USB device,
   a USB device port for inputting and outputting data as the USB device,
   a storage unit for storing data, and
   a control unit for controlling the USB host controller, the USB device controller, and the storage unit, and wherein
   the testing process comprises:
      a cable connecting step for connecting the USB host port and the USB device port by a USB cable,
      a data preparing step for storing data necessary for the test into the storage unit,
      a first transfer step for reading out the test data, as first transfer data to be transferred, from the storage unit and letting the USB host controller and the USB device controller transfer the first transfer data from one port which is one of the USB host port and the USB device port to the other port which is the other one of the USB host port and the USB device port via the USB cable,
      a second transfer step for letting the USB host controller and the USB device controller transfer the first received data, which was received by the other port at the first transfer step, as second transfer data to be transferred, from the other port to the one port via the USB cable, and
      a second received data checking step for letting the control unit check the result of the connection test by comparing the second received data, which was received by the one port at the second transfer step, with the test data stored in the storage unit.

Preferably, the testing process further comprises a first received data checking step for letting the control unit check the result of the connection test by comparing the first received data with the test data stored in the storage unit.

It is preferable that when the control unit determines that the second received data correspond to the test data at the second received data checking step, the operation steps at least from the first transfer step to the second received data checking step are repeated.

Preferably, the storage unit stores descriptors indicating basic information of the USB device, wherein
the testing step further comprises
a descriptor obtaining step for letting the USB host controller obtain a descriptor in response to a GetDescriptor command, and
a descriptor determining step for letting the control unit to determine whether or not the descriptor obtained by the USB host controller corresponds to a descriptor stored in the storage unit, and wherein
when the control unit determines that the descriptor obtained by the USB host controller corresponds to the descriptor stored in the storage unit, the operation steps at least from the first transfer step to the second received data checking step are repeated.

The invention also relates a method for conducting a connection test, for testing connection between a USB host and a USB device, relative to a data transfer apparatus, for conducting data transfer based on USB (Universal Serial Bus) standard, including a USB host controller for controlling operations as the USB host, a USB host port for inputting and outputting data as the USB host, a USB device controller for controlling operations as the USB device, a USB device port for inputting and outputting data as the USB device, a storage unit for storing data, and a control unit for controlling the USB host controller, the USB device controller, and the storage unit, the method comprising:
a cable connecting step for connecting the USB host port and the USB device port by a USB cable,
a data preparing step for storing data necessary for the test into the storage unit,
a first transfer step for reading out the test data, as first transfer data to be transferred, from the storage unit and letting the USB host controller and the USB device controller transfer the first transfer data from one port which is one of the USB host port and the USB device port to the other port which is the other one of the USB host port and the USB device port via the USB cable,
a second transfer step for letting the USB host controller and the USB device controller transfer the first received data, which was received by the other port at the first transfer step, as second transfer data to be transferred, from the other port to the one port via the USB cable, and
a second received data checking step for letting the control unit check the result of the connection test by comparing the second received data, which was received by the one port at the second transfer step, with the test data stored in the storage unit.

The invention further relates a data transfer apparatus for conducting data transfer based on USB (Universal Serial Bus) standard, including:
a USB host controller for controlling operations as a USB host,
a USB host port for inputting and outputting data as the USB host,
a USB device controller for controlling operations as a USB device,
a USB device port for inputting and outputting data as the USB device,
a storage unit for storing data, and
a control unit for controlling the USB host controller, the USB device controller, and the storage unit, wherein
in case of a connection test for testing connection between the USB host and the USB device relative to the data transfer apparatus,
the USB host port and the USB device port are connected to each other by a USB cable,
the storage unit stores test data necessary for the test,
the USB host controller and the USB device controller read out the test data, as first transfer data to be transferred, from the storage unit and transfer the first transfer data from one port which is one of the USB host port and the USB device port to the other port which is the other one of the USB host port and the USB device port via the USB cable,
the USB host controller and the USB device controller transfer the first received data, which was received by the other port at the first transfer step, as second transfer data to be transferred, from the other port to the one port via the USB cable, and
the control unit checks the result of the connection test by comparing the second received data, which was received by the one port at the second transfer step, with the test data stored in the storage unit.

The present invention has the following arrangements.
(Arrangement 1) A method for manufacturing a data transfer apparatus for conducting data transfer based on USB (Universal Serial Bus) standard, comprises: an assembling process for assembling the data transfer apparatus; and a testing process for testing connection between a USB host and a USB device relative to the data transfer apparatus which was assembled in the assembling process, wherein the assembling process comprises assembling the data transfer apparatus including a USB host controller for controlling operations as the USB host, a USB host port for inputting and outputting data as the USB host, a USB device controller for controlling operations as the USB device, a USB device port for inputting and outputting data as the USB device, a storage unit for storing data, and a control unit for controlling the USB host controller, the USB device controller, and the storage unit is assembled, and wherein the testing process comprises: a cable connecting step for connecting the USB host port and the USB device port by a USB cable, a data preparing step for storing data necessary for the test into the storage unit, a first transfer step for reading out the test data, as first transfer data to be transferred, from the storage unit and letting the USB host controller and the USB device controller transfer the first transfer data from one port which is one of the USB host port and the USB device port to the other port which is the other one of the USB host port and the USB device port via the USB cable, a second transfer step for letting the USB host controller and the USB device controller transfer the first received data, which was received by the other port at the first transfer step, as second transfer data to be transferred, from the other port to the one port via the USB cable, and a second received data checking step for letting the control unit check the result of the connection test by comparing the second received data, which was received by the one port at the second transfer step, with the test data stored in the storage unit.

According to this arrangement, the connection test can be carried out by the data transfer apparatus alone for both the functions of the USB host and the USB device effectively without using, for example, an external apparatus having a USB device controller and an external apparatus having a USB host controller. This minimizes the equipment required for the test. This also reduces the cost of the test.

Further, the first received data which was received by the other port at the first transfer step is directly sent back as the second transfer data, thereby reducing the number of steps of the test and achieving the test efficiently at a time for both functions of the USB host and the USB device. This allow suitable connection test to be conducted relative to the data transfer apparatus having ports for both the USB host and the USB device, taking advantage of the arrangement of the apparatus.

When the second received data correspond to the test data, it is determined that the result of the connection test is normal at the second received data checking step. On the other hand, when the second received data do not correspond to the test data, it is determined that the result of the connection test is abnormal. In this case, the result of the connection test is informed by turning on a LED or the like. The data transfer apparatus may be a printing apparatus. The control unit may be a CPU of the data transfer apparatus. The control unit may be a part of an LSI composing the USB host controller or the USB device controller.

(Arrangement 2) The testing process further comprises a first received data checking step for letting the control unit check the result of the connection test by comparing the first received data with the test data stored in the storage unit.

This arrangement enables suitable determination which of the USB host and the USB device is abnormal, for example. This arrangement allows the connection test to be further suitably conducted.

When the first received data correspond to the test data, it is determined that the result of the connection test is normal at the first received data checking step. On the other hand, when the first received data do not correspond to the test data, it is determined that the result of the connection test is abnormal. In this case, the result of the connection test is informed by turning on a LED or the like.

(Arrangement 3) When the control unit determines that the second received data correspond to the test data at the second received data checking step, the operation steps at least from the first transfer step to the second received data checking step are repeated. According to this arrangement, the bidirectional data transfers between the USB host port and the USB device port are repeated, thereby achieving further suitable connection test.

At the first transfer step and the second transfer step, transfer data for 1 packet are transferred by bulk transfer. In the testing process, the operations from the first transfer step to the second received data checking step are repeated until the data transfers are conducted for a predetermined time period or a predetermined number. When it is determined that the result of the connection test is abnormal, the testing process terminates the repetition. The testing process may repeat the operation steps at least from the first transfer step to the second received data checking step until abnormal data transfer occurs.

The data preparing step may be conducted before the first transfer step even in case of the second repetition or later. In this case, the testing process repeats the operations from the data preparing step to the second received data checking step. At the data preparing step, new test data different from those for the former case may be stored in the storage unit for each repetition.

For the second repetition or later, the data preparing step may be omitted. In this case, the second received data as the result of the transfer of the test data at the first transfer step and the second transfer step of the former case are transferred as the first transfer data at the first transfer step.

(Arrangement 4) The storage unit stores descriptors indicating basic information of the USB device, wherein the testing step further comprises a descriptor obtaining step for letting the USB host controller obtain a descriptor in response to a GetDescriptor command, and a descriptor determining step for letting the control unit to determine whether or not the descriptor obtained by the USB host controller corresponds to a descriptor stored in the storage unit, and wherein when the control unit determines that the descriptor obtained by the USB host controller corresponds to the descriptor stored in the storage unit, the operation steps at least from the first transfer step to the second received data checking step are repeated.

According to this arrangement, the connection test can be carried out after verifying that environmental conditions for carrying out the connection test are satisfied. For example, it can be suitable checked whether or not the USB host port and the USB device port are correctly connected. Therefore, the connection test can be further suitably conducted. At the descriptor determining step, the USB host controller obtains sequentially descriptors indicating, a vendor ID, a product ID, Manufacturer name, and Product name, respectively.

(Arrangement 5) A method for conducting a connection test, for testing connection between a USB host and a USB device, relative to a data transfer apparatus, for conducting data transfer based on USB (Universal Serial Bus) standard, including a USB host controller for controlling operations as the USB host, a USB host port for inputting and outputting data as the USB host , a USB device controller for controlling operations as the USB device, a USB device port for inputting and outputting data as the USB device, a storage unit for storing data, and a control unit for controlling the USB host controller, the USB device controller, and the storage unit, the method comprises: a cable connecting step for connecting the USB host port and the USB device port by a USB cable, a data preparing step for storing data necessary for the test into the storage unit, a first transfer step for reading out the test data, as first transfer data to be transferred, from the storage unit and letting the USB host controller and the USB device controller transfer the first transfer data from one port which is one of the USB host port and the USB device port to the other port which is the other one of the USB host port and the USB device port via the USB cable, a second transfer step for letting the USB host controller and the USB device controller transfer the first received data, which was received by the other port at the first transfer step, as second transfer data to be transferred, from the other port to the one port via the USB cable, and a second received data checking step for letting the control unit check the result of the connection test by comparing the second received data, which was received by the one port at the second transfer step, with the test data stored in the storage unit. According to this arrangement, the same effects of the arrangement 1 can be obtained.

(Arrangement 6) A data transfer apparatus for conducting data transfer based on USB (Universal Serial Bus) standard, includes: a USB host controller for controlling operations as a USB host, a USB host port for inputting and outputting data as the USB host, a USB device controller for controlling operations as a USB device, a USB device port for inputting and outputting data as the USB device, a storage unit for storing data, and a control unit for controlling the USB host controller, the USB device controller, and the storage unit, wherein in case of a connection test for testing connection between the USB host and the USB device relative to the data transfer apparatus, the USB host port and the USB device port are connected to each other by a USB cable, the storage unit stores test data necessary for the test, the USB host controller and the USB device controller read out the test data, as first transfer data to be transferred, from the storage unit and transfer the first transfer data from one port which is one of the USB host port and the USB device port to the other port which is the other one of the USB host port and the USB device port via the USB cable, the USB host controller and the USB device controller transfer the first received data, which was received by the other port at the first transfer step, as second transfer data to be transferred, from the other port to the one port via the USB cable, and the control unit checks the result of the connection test by comparing the second received data, which was received by the one port at the second transfer step, with the test data stored in the storage unit. According to this arrangement, the same effects of the arrangement 1 can be obtained.

According to the present invention, it is possible to suitably efficiently carry out connection tests of, for example, a data transfer apparatus having both a USB host port and a USB device port.

Hereinafter, the above, and the other objects, features and advantages of the present invention, will be made apparent from the description of a preferred embodiment, given as non-limiting examples, with reference to the accompanying drawings in which:
Fig. 1 is an illustration showing a structural example of a data transfer apparatus 10 according to an embodiment of the present invention;
Fig. 2 is a flow chart showing an example of the method of connection test carried out in the testing process; and
Fig. 3 is a communication flow diagram showing an example of communication in the data transfer apparatus 10 during the connection test; wherein 10 ... data transfer apparatus, 102 ... USB host controller, 104 ... USB host port, 106 ... USB device controller, 108 ... USB device port, 110 ... memory, 112 ... CPU, 114 ... ROM, 116 ... LED

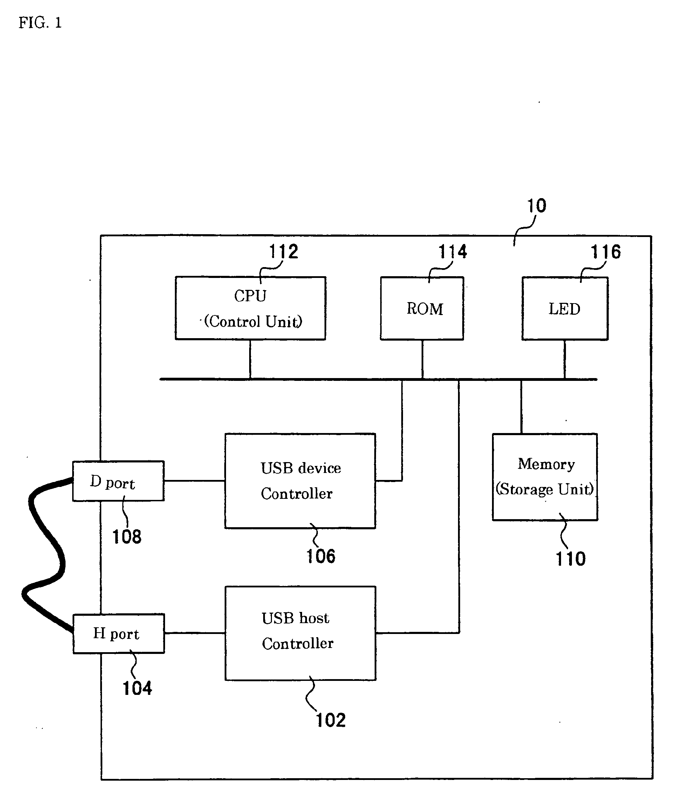

Fig. 1 shows a structural example of a data transfer apparatus 10 according to an embodiment of the present invention. The data transfer apparatus 10 is an apparatus for conducting data transfer based on USB (Universal Serial Bus) standard and comprises a USB host controller 102, a USB host port 104, USB device controller 106, a USB device port 108, a memory 110, a CPU 112, a ROM 114, and an LED 116.

It should be noted that the data transfer apparatus 10 may be a printing apparatus. In this case, the data transfer apparatus 10 further comprises components necessary for printing such as a print head.

The USB host controller 102 is a controller for controlling operations as a USB host. The USB host port 104 is a connector for inputting and outputting data as the USB host. The USB device controller 106 is a controller for controlling operations as a USB device. The USB device port 108 is a connector for inputting and outputting data as the USB device.

The memory 110 is a RAM as an example of a storage unit for storing data. The CPU 112 is an example of a control unit for controlling other components such as the USB host controller 102, the USB device controller 106, and the memory 110. The ROM 114 is a ROM for storing information necessary for operation of the data transfer apparatus 10. The LED 116 is a display for informing the state of operation of the data transfer apparatus 10.

Now, the manufacturing method of the data transfer apparatus 10 will be described. In this embodiment, the manufacturing method of the data transfer apparatus 10 comprises an assembling process and a testing process. The assembling process is a process for assembling the data transfer apparatus 10 composed of the aforementioned respective components. The testing process is a process for carrying out tests relative to the assembled data transfer apparatus 10. In this embodiment, the test carried out in the testing process is a connection test for testing connection between the USB host and the USB device.

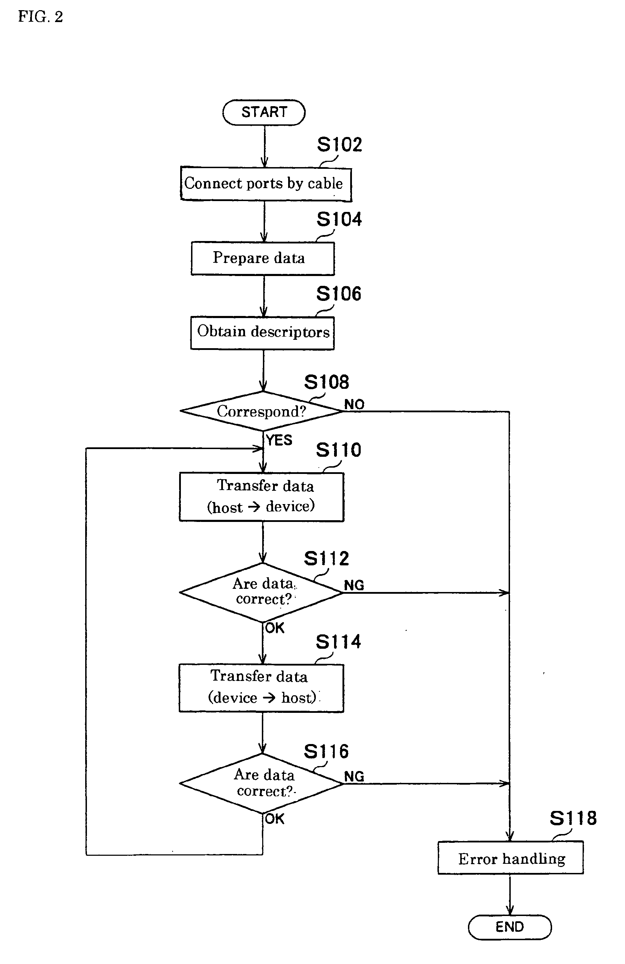

Fig. 2 is a flow chart showing an example of the method of connection test carried out in the testing process. In the connection test of this embodiment, the USB host port 104 and the USB device port 108 are first connected by a USB cable, for example, manually by an operator (cable connecting step S 102). After connecting the USB host port 104 and the USB device port 108, the CPU 112 prepares data necessary for test (data preparing step S104). Accordingly, the test data which will be used for the test are stored in the memory 110. In this embodiment, the CPU 112 also stores, for example, descriptors indicating the basic information of the USB device in the memory 110. The CPU 112 prepares the test data according to, for example, a program stored in the ROM 114. Also the CPU 112 reads out the descriptor to be stored in the memory 110 from the ROM 114.

Following that, the CPU 112 lets the USB host controller 102 obtain descriptors in response to a GetDescriptor command (descriptor obtaining step S106). In this embodiment, the USB host controller 102 obtains sequentially a plurality of descriptors indicating, a vendor ID, a product ID, Manufacturer name, and Product name, respectively.

The CPU 112 determines whether or not the descriptors obtained by the USB host controller 102 correspond to the descriptors stored in the memory 110 (descriptor determining step S108). When all of the descriptors correspond to the stored descriptors (Yes at S108), it proceeds to steps of conducting operation of data transfer (S110 through S116). Accordingly, the connection test will be carried out after verifying that environmental conditions for carrying out the connection test are satisfied.

On the other hand, if any one of the descriptors does not correspond or descriptors are not adequately obtained at the descriptor obtaining step S106, a predetermined error handling is conducted (error handling step S118) and the operation is stopped.

In the operation of data transfer (S110 through S 116), the CPU 112 first reads out test data, as first transfer data to be transferred, from the memory 110. Then, the CPU 112 lets the USB host controller 102 and the USB device controller 106 transfer the first transfer data from the USB host port 104 to the USB device port 108 through the USB cable (first transfer step S110). At the first transfer step S110, the USB device controller 106 stores first received data, as data received by the USB device port 108, in the memory 110.

The USB host port 104 is an example of one of the ports as a sending side at the first transfer step S110. The USB device port 108 is an example of the other port as a receiving side at the first transfer step S110. In an alternative example of the present invention, for example, the USB device port 108 may be one port and the USB host port 104 may be the other port.

Following that, the CPU 112 checks the data transferred at the first transfer step S110 (first received data checking step S112). In this embodiment, the CPU 112 reads out the test data and the first received data stored in the memory 110 and compares the test data with the first received data. If the test data and the first received data do not correspond to each other (No at S112), the CPU 112 determines that the transfer was not adequately conducted and the result of the connection test is abnormal. In this case, it proceeds to the error handling step S 118 to conduct error handling. At the error handling step S118, the CPU 112 informs the operator or the like of the result of the connection test, for example, by turning on the LED 116.

On the other hand, when the test data and the first received data correspond to each other (Yes at S112), the CPU 112 determines that the transfer was adequately conducted and the result of the connection test up to this point is normal. In this case, the CPU 112 then reads out the first received data, as second transfer data to be transferred, from the memory 110. Then, the CPU 112 lets the USB host controller 102 and the USB device controller 106 transfer the second transfer data from the USB device port 108 to the USB host port 104 through the USB cable (second transfer step S114). At the second transfer step S114, the USB host controller 102 and the USB device controller 106 directly send back the test data, which was transferred at the first transfer step S110. The USB host controller 102 stores second received data, as data received by the USB host port 104, in the memory 110.

Following that, the CPU 112 checks the data transferred at the second transfer step S 114 (second received data checking step S116). In this embodiment, the CPU 112 reads out the test data and the second received data stored in the memory 110 and compares the test data with the second received data. If the test data and the second received data do not correspond to each other (No at S 116), the CPU 112 determines that the transfer was not adequately conducted and the result of the connection test is abnormal. In this case, it proceeds to the error handling step S118 to conduct error handling. At the error handling step S118, the CPU 112 informs the operator of the result of the connection test, for example, by turning on the LED 116.

On the other hand, when the test data and the second received data correspond to each other (Yes at S116), the CPU 112 determines that the transfer was adequately conducted and the result of the connection test up to this point is normal. In this case, it returns to the first transfer step S110 and conducts the data transfer from the USB host port 104 to the USB device port 108 again. In this manner, the data transfer apparatus 10 repeats the bidirectional data transfers between the USB host port 104 and the USB device port 108 at the first transfer step S 110 and the second transfer step S 114 until abnormal data transfer occurs.

The CPU 112 normally terminates the connection test, for example, when the operation from the first transfer step S110 to the second received data checking step S116 is repeated a predetermined number of times. The CPU 112 may normally terminate the connection test when the operations from the first transfer step S 110 to the second received data checking step S116 are repeated for a predetermined time period.

According to this embodiment, the connection test can be carried out by the data transfer apparatus 10 alone for both the functions of the USB host and the USB device effectively without using an external apparatus having a USB device controller and an external apparatus having a USB host controller. This also minimizes the equipment required for the test and reduces the cost of the test.

Further, for example, the transfer data of the first transfer step S110 is directly sent back at the second transfer step S114, thereby reducing the number of steps of the test and achieving the test efficiently at a time for both functions of the USB host and the USB device. This allow suitable connection test to be conducted relative to the data transfer apparatus 10 having ports for both the USB host and the USB device, taking advantage of the arrangement of the apparatus.

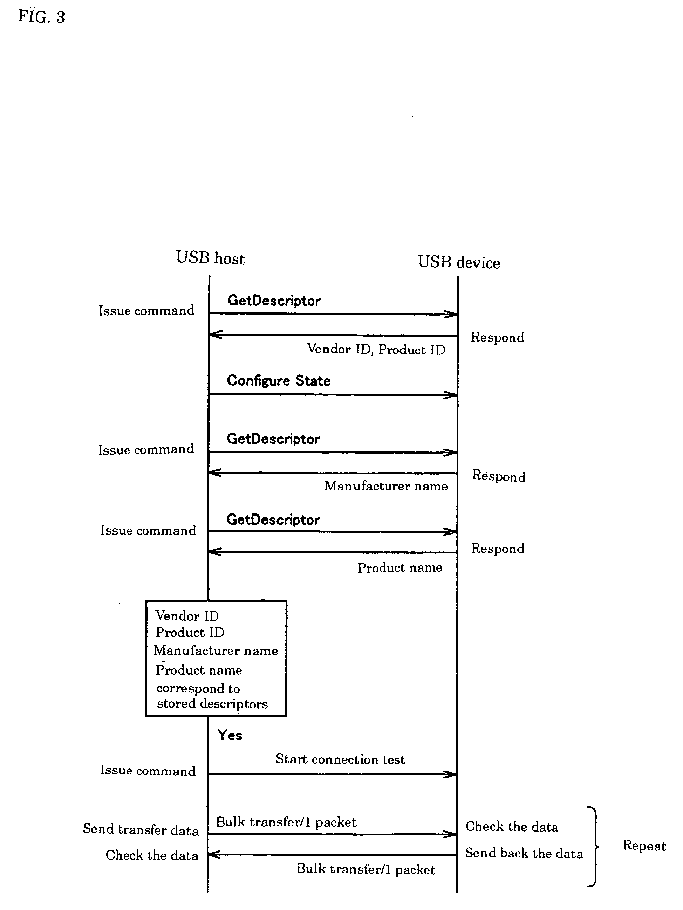

Fig. 3 is a communication flow diagram showing an example of communication in the data transfer apparatus 10 during the connection test. In the connection test of this embodiment, the USB host comprising the USB host controller 102 and the USB host port 104 serves as a basis for the communication. The USB host sends a command (issues a command) to the USB device comprising the USB device controller 106 and the USB device port 108. The USB device corresponds to this command.

For example, at the descriptor obtaining step S106, the USB host sends a GetDescriptor command to the USB device. The USB device responds to this command so as to send a descriptor indicating a vendor ID and a product ID. Following this, the USB host sends a Configure state command and a next GetDescriptor command to the USB device. The USB device responds to this command so as to send a descriptor indicating Manufacturer name. Further, the USB host sends a next GetDescriptor command to the USB device. The USB device responds to this command so as to send a descriptor indicating Product name.

In this manner, the USB host controller 102 obtains the descriptors required for verifying the environmental conditions for carrying out the connection test. When it is determined that the descriptors correspond with stored descriptors at the descriptor determining step S108, the USB host controller 102 sends a command for start of the connection test. In respond to this command, the USB host and the USB device start data transfer for the connection test.

In this data transfer, first the USB host sends test data for 1 packet as first transfer data to the USB device by bulk transfer, at the first transfer step S110. Following this, at the first received data checking step S112, it is determined whether or not the first received data received by the USB device are normal.

When the first received data are normal, the USB device sends the first transfer data as second transfer data to the USB host by bulk transfer, at the second transfer step S114. Following this, at the second received data checking step S112, it is determined whether or not the second received data received by the USB host are normal.

When the second received data are normal, the operation returns to the data transfer from the USB host to the USB deice and repeats the operations following the data transfer. If it is determined that either data received by the USB host or the USB device are abnormal, the CPU 112 turns on the LED 116 for example and terminates the connection test. In this manner, the connection test which has been described with reference to Fig. 2 can be suitably carried out.

Though the present invention has been described with regard to the embodiment, the technical scope of the present invention is not limited to the scope described in the aforementioned embodiment. It will be apparent to those skilled in the art that various modifications and improvements can be applied to the aforementioned embodiment. It is apparent from the claims of the present invention that embodiments with such modifications and improvements are within the technical scope of the present invention.

The present invention can be suitably used in a data transfer apparatus, for example.

## Claims

1. A method for manufacturing a data transfer apparatus for conducting data transfer based on USB (Universal Serial Bus) standard, comprising:
an assembling process for assembling said data transfer apparatus; and
a testing process for testing connection between a USB host and a USB device relative to said data transfer apparatus which was assembled in the assembling process, wherein
said assembling process comprises assembling said data transfer apparatus including:
a USB host controller for controlling operations as the USB host,
a USB host port for inputting and outputting data as the USB host,
a USB device controller for controlling operations as the USB device,
a USB device port for inputting and outputting data as the USB device,
a storage unit for storing data, and
a control unit for controlling said USB host controller, said USB device controller, and said storage unit, and wherein
said testing process comprises:
a cable connecting step for connecting said USB host port and said USB device port by a USB cable,
a data preparing step for storing data necessary for the test into said storage unit,
a first transfer step for reading out said test data, as first transfer data to be transferred, from said storage unit and letting said USB host controller and said USB device controller transfer said first transfer data from one port which is one of said USB host port and said USB device port to the other port which is the other one of said USB host port and said USB device port via said USB cable,
a second transfer step for letting said USB host controller and said USB device controller transfer the first received data, which was received by said the other port at said first transfer step, as second transfer data to be transferred, from said the other port to said one port via said USB cable, and
a second received data checking step for letting said control unit check the result of said connection test by comparing said second received data, which was received by said one port at said second transfer step, with said test data stored in said storage unit.

2. A method of manufacturing a data transfer apparatus according to claim 1, wherein said testing process further comprises a first received data checking step for letting said control unit check the result of said connection test by comparing said first received data with said test data stored in said storage unit.

3. A method of manufacturing a data transfer apparatus according to claim 1 or 2, wherein when said control unit determines that said second received data correspond to said test data at said second received data checking step, the operation steps at least from said first transfer step to said second received data checking step are repeated.

4. A method of manufacturing a data transfer apparatus according to claim 3, wherein said storage unit stores descriptors indicating basic information of the USB device, wherein
said testing step further comprises
a descriptor obtaining step for letting said USB host controller obtain a descriptor in response to a GetDescriptor command, and
a descriptor determining step for letting said control unit to determine whether or not the descriptor obtained by said USB host controller corresponds to a descriptor stored in said storage unit, and wherein
when said control unit determines that the descriptor obtained by said USB host controller corresponds to the descriptor stored in said storage unit, the operation steps at least from said first transfer step to said second received data checking step are repeated.

5. A method for conducting a connection test, for testing connection between a USB host and a USB device, relative to a data transfer apparatus, for conducting data transfer based on USB (Universal Serial Bus) standard, including a USB host controller for controlling operations as the USB host, a USB host port for inputting and outputting data as the USB host, a USB device controller for controlling operations as the USB device, a USB device port for inputting and outputting data as the USB device, a storage unit for storing data, and a control unit for controlling said USB host controller, said USB device controller, and said storage unit, said method comprising:
a cable connecting step for connecting said USB host port and said USB device port by a USB cable,
a data preparing step for storing data necessary for the test into said storage unit,
a first transfer step for reading out said test data, as first transfer data to be transferred, from said storage unit and letting said USB host controller and said USB device controller transfer said first transfer data from one port which is one of said USB host port and said USB device port to the other port which is the other one of said USB host port and said USB device port via said USB cable,
a second transfer step for letting said USB host controller and said USB device controller transfer the first received data, which was received by said the other port at said first transfer step, as second transfer data to be transferred, from said the other port to said one port via said USB cable, and
a second received data checking step for letting said control unit check the result of said connection test by comparing said second received data, which was received by said one port at said second transfer step, with said test data stored in said storage unit.

6. A data transfer apparatus for conducting data transfer based on USB (Universal Serial Bus) standard, including:
a USB host controller for controlling operations as a USB host,
a USB host port for inputting and outputting data as the USB host,
a USB device controller for controlling operations as a USB device,
a USB device port for inputting and outputting data as the USB device,
a storage unit for storing data, and
a control unit for controlling said USB host controller, said USB device controller, and said storage unit, wherein
in case of a connection test for testing connection between the USB host and the USB device relative to said data transfer apparatus,
said USB host port and said USB device port are connected to each other by a USB cable,
said storage unit stores test data necessary for the test,
said USB host controller and said USB device controller read out said test data, as first transfer data to be transferred, from said storage unit and transfer said first transfer data from one port which is one of said USB host port and said USB device port to the other port which is the other one of said USB host port and said USB device port via said USB cable,
said USB host controller and said USB device controller transfer the first received data, which was received by said the other port at said first transfer step, as second transfer data to be transferred, from said the other port to said one port via said USB cable, and
said control unit checks the result of said connection test by comparing said second received data, which was received by said one port at said second transfer step, with said test data stored in said storage unit.
